# EUROPÄISCHE PATENTSCHRIFT

(11) **EP 0 751 017 B1**
(45) Veröffentlichungstag und Bekanntmachung des Hinweises auf die Patenterteilung: **01.09.1999**
(21) Anmeldenummer: 96110122.7
(22) Anmeldetag: 22.06.1996
(51) Int. Cl.: B60C 29/02, B60C 23/04

(54) **Vorrichtung zum Messen des Reifendruckes in einem Luftreifen eines Fahrzeuges**
Device for measuring the pressure of an automobile tyre
Dispositif pour mesurer la pression d'un pneumatique d'un véhicule

(30) Priorität: 26.06.1995 DE 19522567
(43) Veröffentlichungstag der Anmeldung: 02.01.1997
(73) Patentinhaber: Alligator Ventilfabrik GmbH, D-89537 Giengen (DE)
(72) Erfinder: Gabelmann, Volker, 89168 Niederstotzingen (DE); Reinhardt, Rolf, 89537 Giengen (DE)
(74) Vertreter: Hiebsch, Gerhard F., Dipl.-Ing.

(56) Entgegenhaltungen:
- EP-A- 0 285 510
- WO-A-94/20317
- US-A- 4 562 874
- US-A- 4 695 823

## Beschreibung

Die Erfindung betrifft eine Vorrichtung zum Messen des Reifendruckes in einem Luftreifen eines Fahrzeuges mittels eines vom Reifendruck beaufschlagten Meßwertgebers am Felgenbett einer -- ein Reifenventil aufnehmenden -- Felge des Luftreifens, außerhalb dessen dem Meßwertgeber ein Empfänger zugeordnet ist.

Eine Vorrichtung dieser Art beschreibt die DE-OS 37 34 053 der Anmelderin; im Luftreifen ist ein Faltenbalg in etwa achsparalleler Bewegungsrichtung angeordnet und mit einem in Abhängigkeit vom Reifendruck an der Reifenaußenseite achsparallel verschiebbaren Dauermagneten verbunden, der bei Abweichungen vom normalen Reifendruck seine meßbare Lage verändert. Als stationärer Aufnehmer außerhalb des Luftreifens wird ein elektronisches Bauelement vorgeschlagen, welches dank des sog. Halleffektes jeweils senkrecht zu einem fließenden Strom und einem Magnetfeld eine Spannung erzeugt. Der erwähnte Halleffekt geht davon aus, daß in elektrischen Leitern, die sich in einem homogenen Magnetfeld befinden und in denen dazu senkrecht ein elektrischer Strom fließt, senkrecht zum Magnetfeld sowie senkrecht zum Strom eine Spannungsdifferenz entsteht. Die Größe dieses Effektes ist vom Leitermaterial abhängig und durch die jeweilige Hallkonstante gekennzeichnet.

Die Praxis hat nun ergeben, daß bei dem um die Radachse rotierenden Meßwertgeber infolge von -- durch die auftretende Fliehkraft hervorgerufenen -- Reibungskräften zwischen dem Faltenbalg bzw. dem Halter des Dauermagneten einerseits sowie dem Druckrohr anderseits die zum Messen erforderliche axiale Bewegung des Dauermagneten gestört werden kann - es tritt eine Hysterese auf. Durch letztere wird die Erfüllung der Forderung eines linearen drehzahlunabhängigen abhängigen Zusammenhanges zwischen dem Reifendruck und der Bewegung des Meßgebers behindert.

Aus der WO 94/20317 ist eine Vorrichtung zum Messen des Reifendruckes in einem Luftreifen eines Fahrzeuges nach dem Oberbegriff des Patentanspruchs 1 bekannt; insbesondere im Hinblick auf eine einfache, universell verwendbare Ausführung des Signalgehäuses für den Meßwertgeber sowie eine Eignung für verschiedene Felgentypen und -durchmesser ist das gezeigte System jedoch nachteilig.

Aufgabe der vorliegenden Erfindung ist es daher, eine gattungsgemäße Vorrichtung zum Messen des Reifendruckes in einem Luftreifen zu schaffen, welche im Hinblick auf Universalität und Anpaßbarkeit an eine Vielzahl von Felgengrößen, -durchmessern sowie Ventiltypen verbessert ist und insbesondere auf verschiedenen Felgen einen stabilen Sitz ermöglicht.

Die Aufgabe wird durch die Vorrichtung mit den Merkmalen des Patentanspruchs 1 gelöst.

Vorteilhafte Weiterbildungen der Erfindung sind in den Unteransprüchen beschrieben.

Erfindungsgemäß ist mit dem -- die Felge durchsetzenden -- Reifenventil ein dem Felgenbett zugeordnetes Signalgehäuse verbunden, welches eine Senderelektronik als Meßwertgeber für den Reifendruck -- bevorzugt samt einer Batterie als Stromquelle -- enthält; diesem Meßwertgeber ist dann außerhalb des Luftreifens der Empfänger zugeordnet, der die Signale des Meßwertgebers aufnimmt und auswertet.

Das Signalgehäuse ist nach einem weiteren bevorzugten Merkmal der Erfindung an das Reifenventil durch ein Verbindungselement -- insbesondere eine in die Ventilbohrung des Reifenventils eingesetzte hohle Schraube -- angeschlossen und gegenüber diesem einstellbar. Diese Einstellungsmöglichkeit ist erforderlich, um eine günstige Lage des Signalgehäuses an der Seitenwange des Felgenbettes zu erreichen und darüberhinaus eine Anpassung an die verschiedenen Neigungen dieser Seitenwange bei unterschiedlichen Felgentypen.

Die Befestigung des Signalgehäuses am Ventilfuß erfolgt weiterbildungsgemäß dadurch, daß sich der Kopf der Schraube an die ventilferne Seite einer von der Schraube mit Spiel durchgriffenen Längswand des Signalgehäuses anlegt. Letzteres ist also zwischen dem Schraubenkopf und der Seitenwange der Felge klemmend gehalten.

Bei einer bevorzugten Ausführung weist die Längs- oder Rückwand des Signalgehäuses -- oder eine ihr parallel vorgesetzte Querwand -- ein sich parallel zu den Gehäusestirnflächen erstreckendes Langloch für den Hohlschaft der Schraube auf; letztere kann also innerhalb des Langloches quer zum Felgenbett eingestellt werden.

Die Aufhängung des Signalgehäuses an der Schraube ist Teil einer Art von Dreipunktlagerung; beidseits der Schraube sind die beiden Fußelemente vorgesehen, welche in Einbaustellung auf dem Felgenbett aufsitzen. Ihre freie Höhe ist so bemessen, daß der zwischen ihnen vorhandene querschnittlich gekrümmte Abschnitt des Felgenbettes stets in Abstand zur Unterfläche des Signalgehäuses bleibt; dies gewährleistet den sicheren Stand des Signalgehäuses.

Bevorzugt sind die Fußelemente -- etwa als parallel zu dem mittig zwischen ihnen verlaufenden Schraubenschaft gerichtete Leisten -- an das Signalgehäuse nahe dessen Schmalseiten angeformt; d. h. eine durch die Achse des Schraubenschaftes gelegte, die Unterfläche des Signalgehäuses querende Konstruktionsebene soll die Mitte der geschilderten Dreipunktlagerung bilden.

Als günstig hat es sich erwiesen, daß die ventilferne Seite der Querwand eine von einer Seitenfläche des Signalgehäuses ausgehende Scheitelnut mit deren Nutwänden begrenzt, d.h. diese Scheitelnut ist ein nach oben sowie zu einer Seitenfläche offener Sackkanal zur Aufnahme des Schraubenkopfes.

An der ventilnahen Seitenfläche des Signalgehäuses findet sich eine in der Symmetrielinie des Signalgehäuses, welche die Längsachse des Reifenventiles quert, eingeformte Kaverne, in welcher der Fuß des Reifenventils beweglich lagert. Ist die Kaverne beispielsweise von einer Teilkugelfläche -- insbesondere einer Halbkugelfläche -- begrenzt, so kann erkennbar eine teilsphärische Umfangsfläche des Ventilfußes des Reifenventils nahezu beliebig innerhalb der Kaverne gedreht und somit den Gegebenheiten angepaßt werden.

Die Kaverne kann aber im Rahmen der Erfindung auch als Schlitz mit zweiseitig -- seitwärts -- angeordneten Teilkugelflächen ausgebildet sein, und in diesen Schlitz mag dann ein beidseitig flächig gefräster und an zwei gegenüberliegenden Seiten teilsphärischer Ventilfuß eingesetzt werden. Die eingefrästen Flankenflächen dienen ebenso als Verdrehsicherung wie eine mittige Rippe der Kaverneninnenseite einer anderen Ausgestaltung; diese Rippe wird in eine entsprechende Nut des Ventilfußes eingesetzt und hindert diesen am Drehen.

Die beschriebene Kaverne -- sowie die ihr jenseits der Querwand gegenüberliegende Scheitelnut -- ist günstigerweise in einer Anformung des Signalgehäuses vorgesehen; diese Gehäuseanformung ragt mittig von einem quaderartigen Sockelteil auf und verläuft in der erwähnten Mittel- oder Symmetrielinie. Die seitlichen Außenflächen der Gehäuseanformung sind vom Sockelteil weg einander zugeneigt, um Gewicht des Signalgehäuses einsparen zu helfen.

Von der Bodenfläche des beschriebenen Signalgehäuses gehen -- gewichtssymmetrisch zur oben beschriebenen Mittellinie -- Einsatzräume für eine Stromquelle sowie für die Signalelektronik aus. Letztere nimmt die möglicherweise entstehenden Druckänderungen im Reifeninneren auf und gibt ein entsprechendes Signal an den erwähnten Empfänger ab.

Das Signalgehäuse ist aus einem leichten, zähen Kunststoff geformt und -- wie bereits erwähnt -- in seiner Lage an die jeweiligen Vorgaben der Felge anpaßbar. Dazu ist beispielsweise die ventilnahe Rückenfläche des Signalgehäuses von der Bodenfläche ab nach außen geneigt und kann so in günstiger Weise an die ebenfalls geneigte Seitenwange des Felgenbettes angelegt werden.

Das Merkmal, daß die zur Rückenfläche parallele Frontfläche des Signalgehäuses gleichgerichtet zur Rückenfläche verläuft bzw. in einem größeren Winkel geneigt ist, dient -- wie auch gegebenenfalls nach oben einwärts geneigte Schmalseiten -- nicht der erwähnten Lageanpassung sondern dem Schutz vor Montagewerkzeugen; beim Abziehen der Reifen werden zwischen diese und die Felge spatelartige Eisen eingeschoben. Die Werkzeuge greifen über das eingesetzte Signalgehäuse hinweg oder gleiten an diesem ab. Gleiches gilt für den der Felgenseitenwange zugeordneten Reifenwulst des Luftreifens bei dessen De-/Montage. Durch die abgerundeten Kanten sowie die schräg gestellten Flächen wird eine Beschädigung des Signalgehäuses ebenso verhindert wie eine Beschädigung des Reifenwulstes.

Im Rahmen der Erfindung liegen besondere Größenverhältnisse des Signalgehäuses, dessen Länge zwischen 50 mm und 70 mm -- bevorzugt etwa 60 mm -- messen soll. Das Verhältnis seiner Breite zu jener Länge soll sich vorteilhafterweise etwa zwischen 1 : 2 und 1 : 3 bewegen, das Verhältnis der Gesamthöhe zu jener Länge zwischen etwa 1 : 3 und 1 : 4. Schließlich ist ein Verhältnis der Kraghöhe der Fußelemente oder -leisten zur Gehäuselänge mit insbesondere 1 : 16 bevorzugt.

Insgesamt ergibt sich ein die vom Erfinder gesehene Aufgabe in bestechender Weise erfüllendes Zusatzteil zu Felgen, welche mit einem Reifendruck-Überwachungssystem ausgerüstet werden sollen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: einen Teilquerschnitt durch eine Felge für einen Fahrzeugreifen mit Reifenventil und einem daran festliegenden Signalgehäuse;
- Fig. 2:: die ventilwärtige Frontansicht des Signalgehäuses in einem Abschnitt der Fig. 1;
- Fig. 3:: die teilweise geschnittene Rückenansicht des Signalgehäuses;
- Fig. 4:: die Draufsicht auf das Signalgehäuse;
- Fig. 5:: den Querschnitt durch Fig. 3 nach deren Linie V-V mit dem Signalgehäuse zugeordneten Ventilteilen;
- Fig. 6, Fig. 7:: der Fig. 1 entsprechende Wiedergaben weiterer Ausführungsbeispiele;
- Fig. 8, Fig. 10:: teilweise geschnittene Seitenansichten von Reifenventilen mit Signalgehäuse;
- Fig. 9, Fig. 11:: jeweils eine teilweise geschnittene Draufsicht auf Fig. 8 bzw. Fig. 10;
- Fig. 12:: eine andere Ausgestaltung des Signalgehäuses mit Reifenventil in teilweise geschnittener Seitenansicht;
- Fig. 13:: die Draufsicht auf die Unterseite des Signalgehäuses der Fig. 12;
- Fig. 14:: die teilweise geschnittene Rückenansicht des Signalgehäuses gemäß Pfeil XIV der Fig. 13;
- Fig. 15:: die Frontansicht des Signalgehäuses der Fig. 13,14;
- Fig. 16 bis Fig. 18:: Querschnitte durch das Signalgehäuse nach den Linien XVI - XVI, XVII-XVII bzw. XVIII-XVIII der Fig. 13;
- Fig. 19 bis Fig. 21:: einen Ausschnitt aus Fig. 7 mit drei unterschiedlichen Lagen eines Luftreifens auf der Felge.

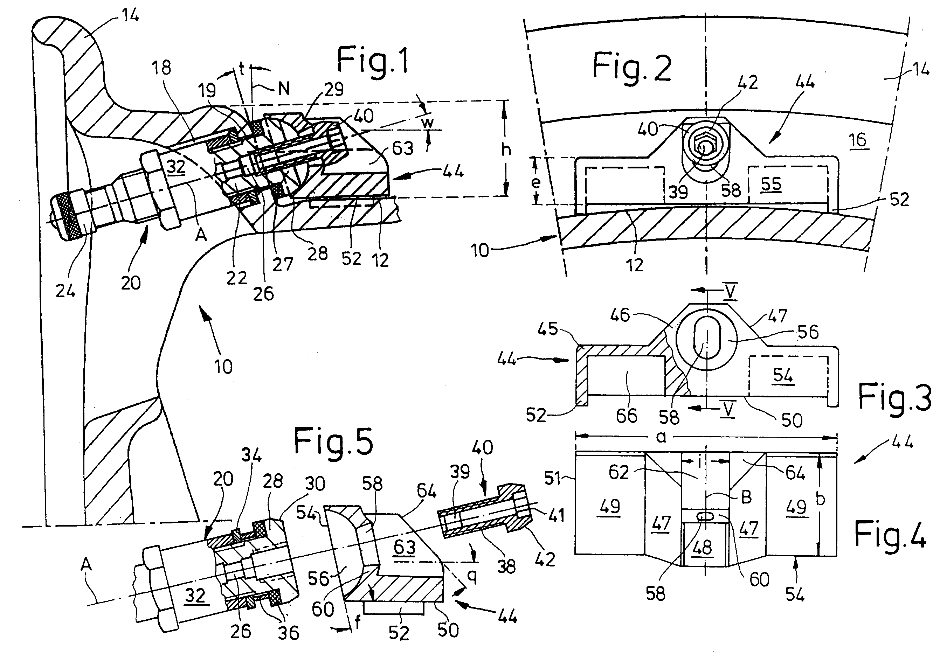

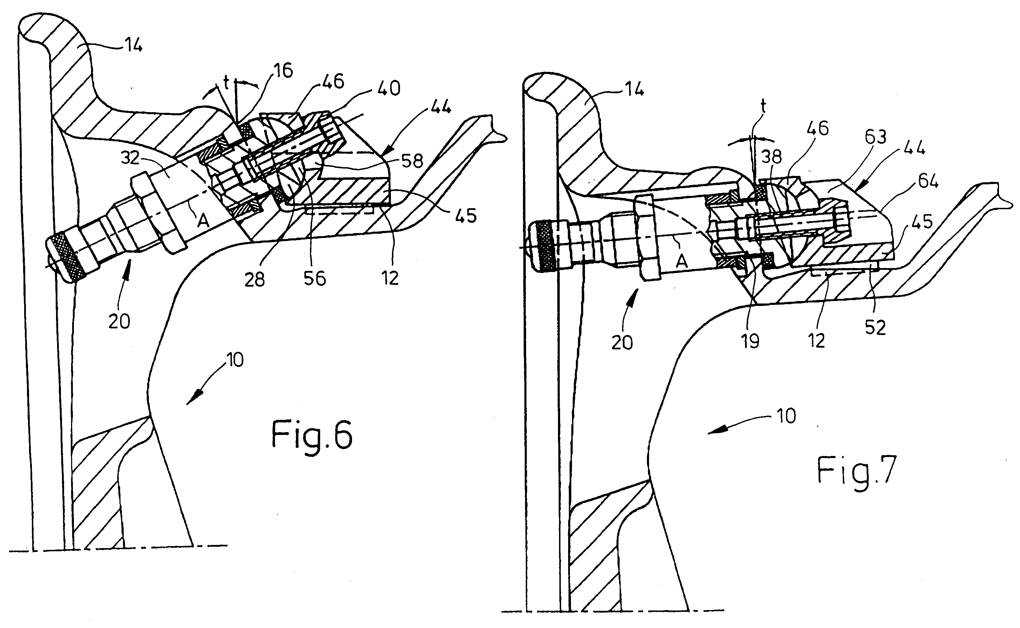

Fig. 1 läßt einen Teil einer aus einer Aluminiumlegierung druckgegossenen Felge 10 für ein nicht dargestelltes Kraftfahrzeugrad erkennen mit einem -- über ein Felgenbett 12 aufragenden -- Felgenhorn 14. In die äußere Seitenwange 16 des Felgenbettes 12 ist ein Ventilloch 18 für ein Reifenventil 20 so eingeformt, daß dessen Längsachse A in einem üblichen Neigungswinkel w von 15° zur Radachse verläuft. Die Höhe h jener Seitenwange 16 kann ebenso unterschiedlich bemessen sein wie der Neigungswinkel w, dem der Wangenwinkel t zur Achsennormalen N entspricht. Dieser mißt in Fig. 6 etwa 25°, in Fig. 7 lediglich 5°.

Das Reifenventil 20 weist in einem Ventilkörper 22 aus einer beschichteten -- beispielsweise eloxierten --Aluminiumlegierung einen nicht erkennbaren Ventileinsatz mit axialer Ventilbohrung auf, den eine Ventilkappe 24 überspannt. Der Ventilkörper 22 ist mit einer axialen Bohrung 26 ausgestattet sowie an dem der Ventilkappe 24 fernen Ende, dem Ventilfuß, mit einem radial abragenden Kragen 28, der eine sphärische Umfangsfläche 29 anbietet. Zwischen dem Kragen 28 und einer -- sich an einer Schraubhülse 32 abstützenden -- Scheibe 34 schmiegt sich die Kante 19 des Ventillochs 18 einem elastischen Ring 36 an.

In die Bohrung 26 ist ein Hohlschaft 38 einer Innenmehrkant-Schraube 40 eingeschraubt, deren -- den Hohlraum 39 des Hohlschaftes 38 verlängernder und ein Mehrkantloch 41 anbietender -- Kopf 42 ein sog. Signalgehäuse 44 gegen den Ventilkragen 28 drückt.

Das Signalgehäuse 44 ist aus einem formstabilen leichten Kunststoff geformt und besteht in der Ausführung der Fig. 2 bis 4 aus einem quaderförmigen Sockelteil 45 -- der Länge a von 50 mm, der größten Breite b von 20 mm und einer Sockelhöhe e von 10 mm -- sowie einer an der -- in Einbaustellung die Längsachse A des Reifenventils 20 in Draufsicht rechtwinkelig querenden -- Mittellinie B des Sockelteils 45 aufragenden Anformung 46. Letztere weist zueinander geneigte Flankenflächen 47 sowie dazwischen eine Kopffläche 48 auf, die parallel zu Schulterflächen 49 des Sockelteils 45 und zu dessen Bodenfläche 50 verläuft. Von dieser stehen -- in Verlängerung von zwei Schmalseiten oder Stirnflächen 51 des Sockelteils 45 -- Fußleisten 52 ab. Letztere ruhen in der in Fig. 1, 2 skizzierten Einbaustellung auf dem Felgenbett 12.

Die in jener Einbaustellung der Seitenwange 16 der Felge 10 zugewandte Längswand als Rückenfläche 54 des Signalgehäuses 44 ist zur Bodenfläche 50 in einem Winkel f von 75° geneigt. An ihr ist in die Gehäuseanformung 46 eine Kaverne 56 etwa kalottenartiger Form eingebracht, von der ein Langloch 58 ausgeht, das in einer parallel zur geneigten Rückenfläche 54 verlaufenden dünnen Querwand 60 der Gehäuseanformung 46 angeordnet ist.

Die Querwand 60 trennt jene Kaverne 56 von einer in der Gehäuseanformung 46 mittig vorgesehenen Scheitelnut 62 der Breite i von hier 8 mm, deren -- einen gerundeten Nutengrund flankierende -- Nutwände 63 parallel zur Mittellinie B gerichtet sind. Die Nutwände 63 enden an Schrägflächen 64 der Gehäuseanformung 46; diese Schrägflächen 64 -- deren Neigungswinkel 45° beträgt -- gehen in die andere Längswand, die Frontfläche 55, des Signalgehäuses 44 über.

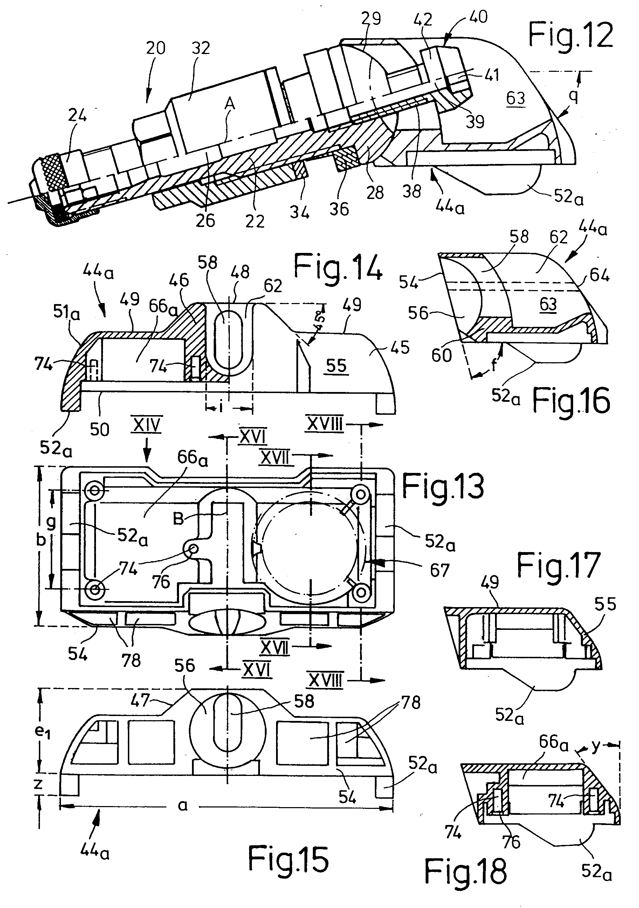

Beidseits der Scheitelnut 62 ist im Sockelteil 45 -- von der Bodenfläche 50 ausgehend -- jeweils ein in Draufsicht kreisförmiger Einsatzraum 66 des Durchmessers d von etwa 15 mm angeordnet; das Signalgehäuse 44 dient zur ventilnahen Aufnahme einer Babyzelle und einer Senderelektronik - beide Einsätze sind in der Zeichnung aus Gründen der Übersichtlichkeit vernachlässigt. Lediglich in Fig. 13 ist in einem runden Einsatzraum 66ₐ eine Babyzelle 67 angedeutet.

Das Signalgehäuse 44 wird mittels der hohlen Innenmehrkant-Schraube 40 am Reifenventil 20 sowie damit am Felgenbett 22 festgelegt und kann sich -- vor allem dank der Kalotte mit negativer Teilkugelfläche und ihres Partners, der Umfangsfläche 30 des Ventilkragens 28 -- auch Seitenwangen 16 verschiedener Wangenwinkel t anpassen; dies lassen vor allem die Fig. 1, 6, 7 in Gegenüberstellung deutlich werden. Erkennbar wird auch die unterschiedliche Lage des Hohlschaftes 38 im Langloch 58 in den Extremstellungen der Fig. 6 und 7.

Die beschriebene Aufhängung des Signalgehäuses durch die --bevorzugt aus vernickeltem Stahl bestehende -- Innenmehrkant-Schraube 40 bildet mit den beiden auf dem Felgenbett 12 ruhenden Fußleisten 52 eine betriebssichere Dreipunktbefestigung für jenes Signalgehäuse 44.

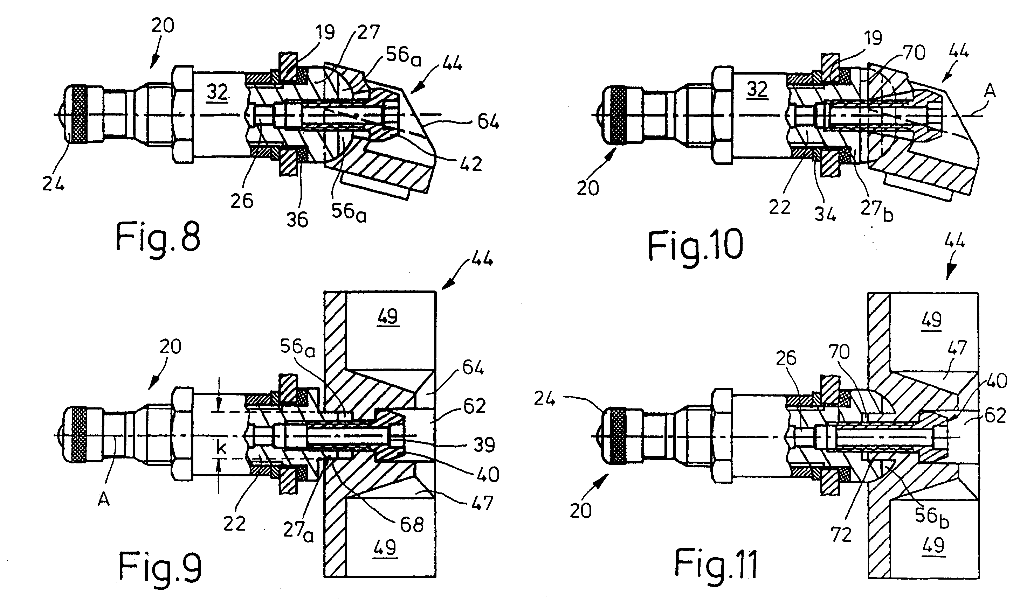

Die Fig. 8 bis 18 der Zeichnung bieten weitere Ausführungen der Paarung Reifenventil/Signalgehäuse an. In Fig. 8,9 sind dem Ventilfuß 27ₐ seitliche Flächen 68 angefräst. Die Kaverne 56ₐ des Signalgehäuses 44 ist hier ein Schlitz der Breite k mit oben und unten vorgesehenen teilsphärischen Flächen; in ihr ist der Ventilfuß 27ₐ verdrehsicher gelagert.

Im Beispiel der Fig. 10,11 ist zur Verdrehsicherung in den Ventilfuß 27_{b} eine Nut 70 eingebracht, in die eine -- von der Innenmehrkant-Schraube 40 durchsetzte -- Rippe 72 des Signalgehäuses 44 eingreift. Diese Rippe 72 ragt in die Kaverne 56_{b} ein.

Die Länge a des Signalgehäuses 44₀ der Fig. 12 bis 18 mißt etwa 63 mm, seine größte Breite b hier etwa 32 mm bei einer Gesamthöhe e₁ -- ohne die hier flügelähnlichen Fußleisten 52ₐ -- von 17 mm; die Höhe z der Fußleisten 52ₐ beträgt 4 mm bei einer Länge g von 15 mm.

Die Stirnflächen 51ₐ des bevorzugt aus Kunststoff geformten Signalgehäuses 44ₐ sind hier in einem Winkel von etwa 35° zur Vertikalen nach oben innen gekrümmt geneigt, der Neigungswinkel y der Frontfläche 55 beträgt etwa 37°.

Fig. 13 läßt in den Einsatzräumen 66ₐ angeformte Hülsen 74 mit Schraublöchern 76 für die einzubringenden Elektronikteile erkennen, Fig. 15 zudem Fenstereinformungen 78 in der Rückenfläche 54.

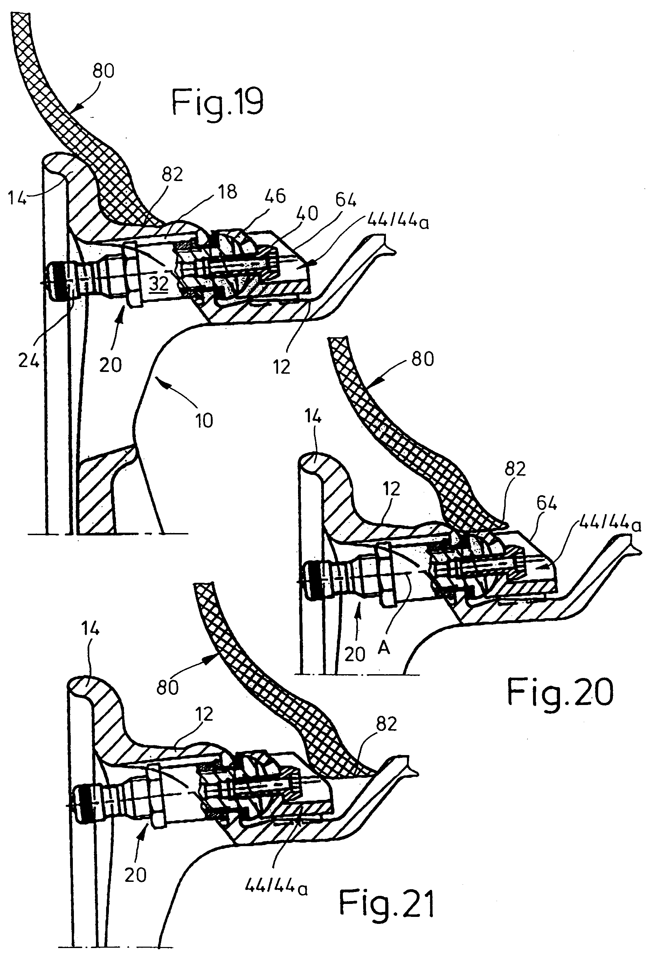

Die Fig. 19 bis 21 skizzieren schematisch unterschiedliche Stellungen eines Luftreifens 80; während dessen Demontage gleitet sein ringförmiger Reifenwulst 82 aus dem Felgenbett 12 über das -- am Ventilfuß 27, 27ₐ,27_{b} und den Fußleisten 52,52ₐ -- dreipunktgelagerte Signalgehäuse 44,44ₐ und dessen frontwärtige Schrägflächen 64, ohne Ortsveränderungen oder gar Deformationen am Signalgehäuse 44,44ₐ hervorzurufen.

Es ergibt sich so ein variabel anzubringendes Gehäuse für Stromquelle und Meßwertgeber, die beide unmittelbar am Reifenventil 20 sitzen und gegen Zugriffe von außen -- insbesondere gegen in den Felgenraum eingeführte Montagewerkzeuge -- geschützt sind. Ist die erwähnte Mittellinie B bezüglich des Gewichts Symmetrielinie des Signalgehäuses 44, wird das Entstehen von Unwuchten durch dieses weitgehend eingeschränkt.

## Patentansprüche

1. Vorrichtung zum Messen des Reifendruckes in einem Luftreifen eines Fahrzeuges mit einem vom Reifendruck beaufschlagten Meßwertgeber, der am Felgenbett (12) einer ein Reifenventil aufnehmenden Felge (10) des Luftreifens anbringbar ist, einem dem Meßwertgeber außerhalb des Luftreifens zugeordneten Empfänger, wobei mit dem Reifenventil (20) ein dem Felgenbett (12) zugeordnetes Signalgehäuse (44, 44ₐ) verbunden ist, welches eine Senderelektronik als Meßwertgeber für den Reifendruck enthält,
dadurch gekennzeichnet, daß
das Signalgehäuse (44,44a) zwei Fußelemente (52,52ₐ) zum Aufsetzen auf das Felgenbett (12) und zum einstellbaren Lagern des Signalgehäuses in einem montierten Zustand aufweist.

2. Vorrichtung mit axialer Ventilbohrung im Reifenventil nach Anspruch 1, dadurch gekennzeichnet, daß das Signalgehäuse (44, 44ₐ) mit dem Reifenventil (20) durch eine in die Ventilbohrung (28) eingreifende Schraube (40) verbunden und gegenüber dieser einstellbar ist.

3. Vorrichtung nach Anspruch 2, dadurch gekennzeichnet, daß sich der Kopf (42) der hohl ausgebildeten Schraube (40) an die ventilferne Seite einer von ihr mit Spiel durchgriffenen Längswand (54) des Signalgehäuses (44, 44ₐ) anlegt, die ein sich parallel zu den Gehäusestirnflächen (51) erstreckendes Langloch (58) od.dgl. Durchbruch für den Hohlschaft (38) der Schraube (40) aufweist, wobei das Langloch (58) od.dgl. Durchbruch für die Schraube (40) in einer zur Längswand (54) parallelen Querwand (60) vorgesehen ist.

4. Vorrichtung nach Anspruch 2 oder 3, gekennzeichnet durch eine Formgebung der Anlagefläche (54) des Signalgehäuses (44, 44ₐ) dergestalt, daß dieses bei angezogener Schraube (40) in das Felgentiefbett gedrückt ist.

5. Vorrichtung nach einem der Ansprüche 2 bis 4, dadurch gekennzeichnet, daß die beiden Fußelemente (52, 52ₐ) von einer felgenwärtigen Unterfläche (50) des Signalgehäuses (44, 44ₐ) abragen, und daß zwischen den Fußelementen von der Achse der Schraube (40) definierte Ebene verläuft, wobei die Fußelemente (52, 52ₐ) leistenartige Anformungen im Bereich von Schmalseiten (51, 51ₐ) des quaderartigen Signalgehäuses (44, 44ₐ) sind.

6. Vorrichtung nach einem der Ansprüche 1 bis 5, dadurch gekennzeichnet, daß das Signalgehäuse (44, 44ₐ) am Reifenventil (20) sowie an den zwei in Abstand zu ihm und in Abstand (a) zueinander angeordneten Fußelementen (52, 52ₐ) gelagert ist.

7. Vorrichtung nach einem der Ansprüche 1 bis 6, gekennzeichnet durch eine von einer Längsseite oder Frontfläche (55) des Signalgehäuses (44, 44ₐ) ausgehende Scheitelnut (62) mit Nutwänden (63).

8. Vorrichtung nach Anspruch 7, dadurch gekennzeichnet, daß die Scheitelnut (62) von einer Querwand (60) begrenzt wird.

9. Vorrichtung nach einem der Ansprüche 1 bis 8, dadurch gekennzeichnet, daß in das Signalgehäuse (44, 44ₐ) an dessen ventilnaher Rückenfläche (54) eine Kaverne (56, 56ₐ, 56_{b}) eingeformt und in dieser der Fuß des Reifenventils (20) einstellbar gelagert ist, wobei die Kaverne (56) von einer Teilkugelfläche, insbesondere einer Halbkugelfläche, begrenzt ist, der eine teilsphärische Umfangsfläche (30) des Ventilfußes (27) anliegt, oder daß in der von Teilkugelflächen begrenzten Kaverne (56_{b}) eine mittige Rippe (72) verläuft, die in eine entsprechende Nut (70) des Ventilfußes (27_{b}) eingesetzt ist.

10. Vorrichtung nach einem der Ansprüche 1 bis 8, dadurch gekennzeichnet, daß in das Signalgehäuse (44, 44ₐ) an dessen ventilnaher Rückenfläche (54) eine Kaverne (56, 56ₐ, 56_{b}) eingeformt und in dieser der Fuß des Reifenventils (20) einstellbar gelagert ist, wobei die Kaverne (56ₐ) als Schlitz ausgebildet ist, in den ein beidseitig flächiger Ventilfuß (27ₐ) eingesetzt ist, wobei im Schlitz an zwei einander gegenüberliegenden Seiten Teilkugelflächen angeordnet sind, denen zwischen den seitlichen Flächen vorgesehene teilsphärische Flächen des Ventilfußes (27ₐ) gegenüberstehen.

11. Vorrichtung nach einem der Ansprüche 1 bis 10, gekennzeichnet durch eine Anformung (46) des Signalgehäuses (44, 44ₐ), die mittig auf einem etwa quaderartigen Sockelteil (45) des Signalgehäuses angeordnet ist.

12. Vorrichtung nach Anspruch 11, dadurch gekennzeichnet, daß seitliche Außenflächen (47) der Gehäuseanformung (46) von Schulterflächen (49) des Sockelteils (45) ab zueinander geneigt sind.

13. Vorrichtung nach einem der Ansprüche 1 bis 12, dadurch gekennzeichnet, daß nahe den Fußelementen (52, 52ₐ) in einem Sockelteil (45) beidseits einer die Längsachse (A) des Signalgehäuses (44, 44ₐ) querenden Mittellinie (B) jeweils ein Einsatzraum (66, 66ₐ) für einen Einsatz, insbesondere für eine Stromquelle oder einen Meßwertgeber, angeordnet ist.

14. Vorrichtung nach einem der Ansprüche 10 bis 13, dadurch gekennzeichnet, daß eine ventilnahe Längsseite oder Rückenfläche (54) des Signalgehäuses (44, 44ₐ) von der Bodenfläche (50) zur Gehäuseanformung (46) hin in einem Winkel (f) nach außen geneigt ist.

15. Vorrichtung nach einem der Ansprüche 1 bis 14, dadurch gekennzeichnet, daß die Länge (a) des Signalgehäuses (44, 44ₐ) zwischen 50 mm und 70 mm, bevorzugt etwa 60 mm, beträgt.

16. Vorrichtung nach einem der Ansprüche 1 bis 15, gekennzeichnet durch ein Verhältnis von Breite (b) zu Länge (a) des Signalgehäuses (44, 44ₐ) etwa von 1 : 2 bis 1 : 3 und/oder durch ein Verhältnis der Gesamthöhe (e₁) des Signalgehäuses (44, 44ₐ) zu seiner Länge (a) von 1 : 3 bis 1 : 4.

17. Vorrichtung nach einem der Ansprüche 1 bis 16, dadurch gekennzeichnet, daß das Verhältnis der Höhe (z) der Fußelemente (52, 52ₐ) zur Länge (a) des Signalgehäuses (44, 44ₐ) etwa 1 : 15 bis 1 : 18, insbesondere 1 : 16, beträgt.

18. Vorrichtung nach einem der Ansprüche 1 bis 17, dadurch gekennzeichnet, daß das Signalgehäuse (44, 44ₐ) aus einem zähen Kunststoff geringen spezifischen Gewichts geformt ist.

19. Vorrichtung nach einem der Ansprüche 1 bis 18, dadurch gekennzeichnet, daß die Fußelemente (52,52ₐ) so ausgebildet sind, daß ein querschnittlich gekrümmter Abschnitt des Felgenbettes (12) stets in einem Abstand zu einer Unterfläche des Signalgehäuses bleibt.

## Claims

1. Device for measuring the inflation pressure in a pneumatic tyre of a vehicle, comprising a transducer which is acted upon by the inflation pressure and can be mounted on the rim base (12) of a rim (10) of the pneumatic tyre receiving a tyre valve, and a receiver associated with the transducer outside the pneumatic tyre, a signal housing (44, 44ₐ) associated with rim base (12) being connected to the tyre valve (20) and containing an electronic transmitter serving as the transducer for the inflation pressure, characterised in that the signal housing (44, 44ₐ) has two base elements (52, 52ₐ) for attaching to the rim base (12) and for adjustably supporting the signal housing in a mounted state.

2. Device with an axial valve bore in the tyre valve according to claim 1, characterised in that the signal housing (44, 44ₐ) is connected to the tyre valve (20) by means of a screw (40) engaging in the valve bore (28) and is adjustable relative to the latter.

3. Device according to claim 2, characterised in that the head (42) of the hollow screw (40) bears against the side of a longitudinal wall (54) of the signal housing (44, 44ₐ) remote from the valve, traversed by the screw with play, and having an elongated hole (58) or similar opening for the hollow shank (38) of the screw (40) extending parallel to the end faces (51) of the housing, the elongated hole (58) or similar opening for the screw (40) being provided in a transverse wall (60) parallel to the longitudinal wall (54).

4. Device according to claim 2 or claim 3, characterised in that the bearing surface (54) of the signal housing (44, 44ₐ) is shaped in such a manner that it is pressed into the rim base when the screw (40) is tightened.

5. Device according to one of claims 2 to 4, characterised in that the two base elements (52, 52ₐ) project from a lower surface (50) of the signal housing (44, 44ₐ) towards the rim and that a plane defined by the axis of the screw (40) extends between the base elements, the base elements (52, 52ₐ) being strip-like moulded-on portions in the region of narrow sides (51, 51ₐ) of the square signal housing (44, 44ₐ).

6. Device according to one of claims 1 to 5, characterised in that the signal housing (44, 44ₐ) is supported on the tyre valve (20) and on the two base elements (52, 52ₐ) arranged at a distance therefrom and at a distance (a) from one another.

7. Device according to one of claims 1 to 6, characterised by a top groove (62) with groove walls (63) extending from one longitudinal side or front surface (55) of the signal housing (44, 44ₐ).

8. Device according to claim 7, characterised in that the top groove (62) is delimited by a transverse wall (60).

9. Device according to one of claims 1 to 8, characterised in that a cavern (56, 56ₐ, 56_{b}) is formed in the signal housing (44, 44ₐ) on its rear surface (54) close to the valve and the spud of the tyre valve (20) is adjustably supported therein, the cavern (56) being delimited by a part-spherical surface, in particular a hemispherical surface, bearing against a part-spherical circumferential surface (30) of the valve spud (27), or that a central rib (72) which is inserted into a corresponding groove (70) in the valve spud (27_{b}) extends in the cavern (56_{b}) delimited by part-spherical surfaces.

10. Device according to one of claims 1 to 8, characterised in that a cavern (56, 56ₐ, 56_{b}) is formed in the signal housing (44, 44ₐ) on its rear surface (54) close to the valve and the spud of the tyre valve (20) is adjustably supported therein, the cavern (56ₐ) being designed as a slot into which a valve spud (27ₐ) flat on both sides is inserted, part-spherical surfaces being arranged in the slot on two opposing sides, opposite which are part-spherical surfaces of the valve spud (27ₐ) provided between the lateral surfaces.

11. Device according to one of claims 1 to 10, characterised by a moulded-on portion (46) of the signal housing (44, 44ₐ) arranged centrally on a substantially square base part (45) of the signal housing.

12. Device according to claim 11, characterised in that lateral outer surfaces (47) of the moulded-on portion (46) of the housing are inclined relative to one another away from shoulder surfaces (49) of the base part (45).

13. Device according to one of claims 1 to 12, characterised in that respective insertion spaces (66, 66ₐ) for an insert, in particular for a power source or a transducer, are arranged close to the base elements (52, 52ₐ) in a base part (45) on either side of a centre line (B) traversing the longitudinal axis (A) of the signal housing (44, 44ₐ).

14. Device according to one of claims 10 to 13, characterised in that one longitudinal side or rear surface (54) of the signal housing (44, 44ₐ) close to the valve is inclined towards the outside at an angle (f) from the bottom surface (50) to the moulded-on portion (46) of the housing.

15. Device according to one of claims 1 to 14, characterised in that the length (a) of the signal housing (44, 44ₐ) is between 50 mm and 70 mm, preferably approximately 60 mm.

16. Device according to one of claims 1 to 15, characterised by a ratio of width (b) to length (a) of the signal housing (44, 44ₐ) of approximately 1:2 to 1:3 and/or by a ratio of the overall height (e₁) of the signal housing (44, 44ₐ) to its length (a) of 1:3 to 1:4.

17. Device according to one of claims 1 to 16, characterised in that the ratio of the height (z) of the base elements (52, 52ₐ) to the length (a) of the signal housing (44, 44ₐ) is approximately 1:15 to 1:18, in particular 1:16.

18. Device according to one of claims 1 to 17, characterised in that the signal housing (44, 44ₐ) is formed from a tough plastic of low specific weight.

19. Device according to one of claims 1 to 18, characterised in that the base elements (52, 52ₐ) are designed in such a manner that a portion of the rim base (12) with a curved cross section always remains at a distance from a lower surface of the signal housing.

## Revendications

1. Dispositif pour la mesure de la pression de bandage pneumatique dans un bandage pneumatique d'un véhicule, avec un transducteur de valeur de mesure sollicité par la pression du bandage pneumatique, susceptible d'être monté sur le fond de jante (12) d'une jante (10) recevant une valve de gonflage du bandage pneumatique, un récepteur associé, à l'extérieur du bandage pneumatique, au transducteur de valeur de mesure, un boîtier de signalisation (44, 44ₐ), associé au fond de jante (12), étant relié à la valve de gonflage (20) et contenant une électronique émettrice faisant office de transducteur de valeur de mesure pour la pression de bandage pneumatique,
caractérisé en ce que
le boitier de signalisation (44, 44ₐ) présente deux éléments de pied (52, 62a) à placer sur le fond de jante (12) et pour assurer un montage réglable du boîtier de signalisation à l'état monté.

2. Dispositif avec un alésage axial de valve dans une valve de gonflage selon la revendication 1, caractérisé en ce que le boitier de signalisation (44, 44ₐ) est relié à la valve de gonflage (20), au moyen d'une vis (40) s'engageant dans l'alésage de valve (28), et est réglable par rapport à celui-ci.

3. Dispositif selon la revendication 2, caractérisé en ce que la tête (42) de la vis creuse (40) s'appuie sur la face, éloignée de la valve, d'une paroi longitudinale (54) traversée avec du jeu appartenant au boîtier de signalisation (44, 44ₐ), qui présente un trou oblong (58) ou un passage analogue, s'étendant parallèlement aux faces frontales (51) du boîtier, pour la tige creuse (38) de la vis (40), et en ce que le trou oblong (58) ou le passage analogue destiné à la vis (40) est prévu dans une paroi transversale (60) parallèle à la paroi longitudinale (54).

4. Dispositif selon la revendication 2 ou 3, caractérisé par une configuration de la face d'appui (54) du boitier de signalisation (44, 44ₐ), telle que celui-ci soit pressé dans le fond profond de jante, lorsque la vis (40) est serrée.

5. Dispositif selon l'une des revendications 2 à 4, caractérisé en ce que les deux éléments de pied (52, 52ₐ) ressortent d'une face inférieure (50) située du côté jante du boitier de signalisation (44, 44ₐ) et en ce qu'un plan défini par l'axe de la vis (40) s'étend entre les éléments de pied, les éléments de pied (52, 52ₐ) étant des bossages en barrettes formés dans la zone des côtés étroits (51, 51ₐ) du boîtier de signalisation (44, 44ₐ) du genre parallélépipédique.

6. Dispositif selon l'une des revendications 1 à 5, caractérisé en ce que le boîtier de signalisation (44, 44ₐ) est monté sur la valve de gonflage (20) ainsi que sur les deux éléments de pied (52, 52ₐ) disposés à distance de celle-ci et il distance (a) l'un par rapport à l'autre.

7. Dispositif selon l'une des revendications 1 à 6, caractérisé par une rainure de sommet (62), partant d'une face longitudinale ou d'une surface frontale (55) du boîtier de signalisation (44, 44ₐ) et dotée de parois de rainure (63).

8. Dispositif selon la revendication 7, caractérisé en ce que la rainure de sommet (62) est délimitée par une paroi transversale (60).

9. Dispositif selon l'une des revendications 1 à 8, caractérisé en ce que dans le boîtier de signalisation (44, 44ₐ) est creusée, sur sa surface arrière (54) proche de la valve, une cavité (56, 56ₐ, 56_{b}) et, dans celle-ci, le pied de la valve de gonflage (20) est monté d'une façon réglable, la cavité (56ₐ) étant délimitée par une face sphérique partielle, en particulier une face hémisphérique, qui s'appuie sur une face sphérique partielle (30) du pied de valve (27) ou bien en ce que dans la cavité (56_{b}) délimitée par des faces sphériques s'étend une nervure centrale (72) qui est insérée dans une rainure correspondante (70) appartenant au pied de valve (27_{b}).

10. Dispositif selon l'une des revendications 1 à 8, caractérisé en ce que dans le boîtier de signalisation (44, 44ₐ) est creusée, sur sa surface arrière (54) proche de la valve, une cavité (56, 56ₐ, 56_{b}) et dans celle-ci, le pied de la valve de gonflage (20) est monté réglable, la cavité (56ₐ) étant réalisée sous la forme d'une fente dans laquelle est inséré un pied de valve (27a) plat sur les deux faces, tandis que dans la fente sont disposées sur deux faces, à l'opposé l'une de l'autre, des surfaces sphériques partielles, en face desquelles se trouvent les surfaces sphériques partielles du pied de valve (27a) prévues entre les surfaces latérales.

11. Dispositif selon l'une des revendications 1 à 10, caractérisé par un bossage (46) du boitier de signalisation (44, 44ₐ), disposé centralement sur une partie de socle (45), sensiblement parallélépipédique, du boitier de signalisation.

12. Dispositif selon la revendication 11, caractérisé en ce que les surfaces extérieures (47) latérales du bossage de boîtier (46) sont inclinées l'une par rapport à l'autre, en partant des surfaces d'épaulement (49) de la partie de socle (45).

13. Dispositif selon l'une des revendications 1 à 12, caractérisé en ce que, à proximité des éléments de pied (52, 52ₐ), dans une partie de socle (45), des deux côtés d'une ligne médiane (B) coupant transversalement l'axe longitudinal (A) du boîtier de signalisation (44, 44ₐ), est ménagé chaque fois un espace d'insertion (66, 66ₐ) destiné à un insert, en particulier pour une source de courant électrique, ou bien un transducteur de valeur de mesure.

14. Dispositif selon l'une des revendications 10 à 13, caractérisé en ce qu'une face longitudinale ou une surface arrière (54) du boîtier de signalisation (44, 44ₐ), proche de la valve, est inclinée vers l'extérieur depuis la surface de fond (50) vers le bossage de boîtier (46), en faisant un angle (f).

15. Dispositif selon l'une des revendications 1 à 14, caractérisé en ce que la longueur (a) du boîtier de signalisation (44, 44ₐ) est comprise entre 50 mm et 70 mm, de préférence est d'environ 60 mm.

16. Dispositif selon l'une des revendications 1 à 15, caractérisé par un rapport entre la largeur (b) et la longueur (a) du boîtier de signalisation (44, 44ₐ) d'environ 1:2 à 1:3 et/ou par un rapport entre la hauteur totale (e₁) du boîtier de signalisation (44, 44ₐ) et sa longueur (a) de 1:3 à 1:4.

17. Dispositif selon l'une des revendications 1 à 16, caractérisé en ce que le rapport entre la hauteur (z) des éléments de pied (52, 52ₐ) et la longueur (a) du boîtier de signalisation (44, 44ₐ) est d'environ 1:15 à 1:18, en particulier 1:16.

18. Dispositif selon l'une des revendications 1 à 17, caractérisé en ce que le boîtier de signalisation (44, 44ₐ) est formé à partir d'une matière plastique dure ou tenace, ayant un faible poids spécifique.

19. Dispositif selon l'une des revendications 1 à 18, caractérisé en ce que les éléments de pied (52, 52ₐ) sont réalisés de telle manière qu'un tronçon, à section transversale incurvée, du fond de jante (12), reste toujours à une distance donnée d'une surface inférieure du boîtier de signalisation.
